Europäisches Patentamt

European Patent Office

Office européen des brevets

(19)

(11) Veröffentlichungsnummer: **0 151 139**
**B1**

(12) # EUROPÄISCHE PATENTSCHRIFT

(45) Veröffentlichungstag der Patentschrift:
08.04.87

(51) Int. Cl.⁴: **H 04 Q 7/02,** G 06 F 12/14

(21) Anmeldenummer: 84902441.9

(22) Anmeldetag: 09.06.84

(86) Internationale Anmeldenummer:
PCT/DE 84/00125

(87) Internationale Veröffentlichungsnummer:
WO 85/00719 (14.02.85 Gazette 85/04)

(54) **VERFAHREN UND VORRICHTUNG ZUM SCHUTZ DER MITTELS EINER TASTATUR IN EINEN RAM-SPEICHER EINGEGEBENEN INFORMATIONEN.**

(30) Priorität: 19.07.83 DE 3325887

(43) Veröffentlichungstag der Anmeldung:
14.08.85 Patentblatt 85/33

(45) Bekanntmachung des Hinweises auf die Patenterteilung:
08.04.87 Patentblatt 87/15

(84) Benannte Vertragsstaaten:
AT DE FR GB NL

(56) Entgegenhaltungen:
WO-A-82/00553

Nachrichtentechnische Zeitschrift NTZ, Exemplar 6, 1983, Berlin (DE) "Funktelefon-system", page 403.

(73) Patentinhaber: ROBERT BOSCH GMBH, Postfach 50, D-7000 Stuttgart 1 (DE)

(72) Erfinder: RINGS, Christian, Kilstetter Strasse 61, D-1000 Berlin 37 (DE)
Erfinder: ROSENEGGER, Wolfgang, Borstellstrasse 14, D-1000 Berlin 41 (DE)

(74) Vertreter: Schmidt, Hans- Ekhardt, Robert Bosch GmbH Geschäftsbereich Elektronik Patent- und Lizenzabteilung Forckenbeckstrasse 9-13, D-1000 Berlin 33 (DE)

## Beschreibung

### Stand der Technik

Die Erfindung geht von einem Verfahren nach der im Oberbegriff des Anspruchs 1 angegebenen Gattung aus.

Es ist ein Funktelefonsystem bekannt (NTZ, 1983, Heft 6, Seite 403), bei dem die mobilen Funkstationen mit einem Bedienteil ausgerüstet sind, das unter anderem eine Tastatur zum Eingeben von Rufnummern und dergleichen aufweist. Zu dem Funktelefonsystem gehören eine Mikroprozessorschaltung und ein RAM-Speicher, in dem verschiedene Informationen, wie zum Beispiel Rufnummern, Kurzwahlkennzeichen und bestimmte Funktionsabläufe, wie das automatische Abfragen (Scanning) von Funkkanälen und dergleichen, gespeichert werden können. Der Benutzer kann mittels der Tastatur die Mikroprozessorschaltung dazu veranlassen, bestimmte Informationen in den nachgeschalteten RAM-Speicher einzuschreiben. Umweltbedingte elektrische Störungen, die insbesondere bei in Kraftfahrzeugen eingebauten mobilen Funkstationen auftreten können, führen mitunter zu einem Ausfall der Mikroprozessorschaltung, was ein Überschreiben bzw. Löschen der ursprünglich gespeicherten Informationen zur Folge haben kann.

### Vorteile der Erfindung

Das erfindungsgemäße Verfahren mit den kennzeichnenden Merkmalen des Anspruchs 1 hat den Vorteil, daß in den RAM-Speicher nur dann neue Informationen eingegeben werden können, wenn dazu die Tastatur benutzt wird. Alle anderen Eingabesignale nimmt der RAM-Speicher nicht an.

Durch die in den Unteransprüchen aufgeführten Maßnahmen sind vorteilhafte Weiterbildungen und Verbesserungen des im Anspruch 1 angegebenen Verfahrens möglich. Besonders vorteilhaft ist eine erfindungsgemäße Vorrichtung zur Durchführung des Verfahrens, bei der die Signalausgänge der Tastatur erstens mit einer Mikroprozessorschaltung und zweitens mit einer ODER-Schaltung verbunden sind, bei der der Ausgang der ODER-Schaltung über eine Monoflopschaltung mit einem ersten Eingang einer UND-Schaltung und ein zweiter Eingang der UND-Schaltung mit einem Schreib-Signal-Ausgang der Mikroprozessorschaltung verbunden sind und bei der sich an den Ausgang der UND-Schaltung der Schreib-Eingang des RAM-Speichers anschließt. Mit dieser Vorrichtung wird sichergestellt, daß der Schreib-Eingang des RAM-Speichers nur innerhalb einer bestimmten Zeit nach dem Betätigen einer Taste der Tastatur bei gleichzeitiger Abgabe eines Schreib-Signals der Mikroprozessorschaltung freigegeben wird.

### Zeichnung

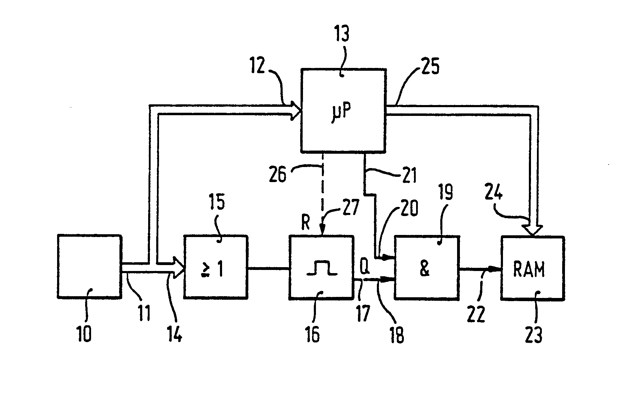

Ein Ausführungsbeispiel der Erfindung ist in der Zeichnung an Hand eines Blockschaltbildes der erfindungsgemäßen Vorrichtung dargestellt und in der nachfolgenden Beschreibung näher erläutert.

### Beschreibung der Erfindung

In der in der Zeichnung als Blockschaltbild dargestellten Vorrichtung zum Speicherschutz bezeichnet 10 eine Tastatur, zum Beispiel eine Wähltastatur für ein Funktelefon. Die an ihren Ausgängen 11 kodierte Wählsignale abgebende Tastatur 10 ist erstens mit Eingängen 12 einer Mikroprozessorschaltung 13 und zweitens mit Eingängen 14 einer ODER-Schaltung 15 verbunden, an die sich eine Monoflopschaltung 16 anschließt, deren nichtinvertierender Ausgang 17 mit einem ersten Eingang 18 einer UND-Schaltung 19 verbunden ist. Ein zweiter Eingang 20 der UND-Schaltung 19 steht mit einem Schreib-Signal-Ausgang 21 der Mikroprozessorschaltung 13 in Verbindung. An die UND-Schaltung 19 schließt sich ein Schreib-Eingang 22 eines RAM-Speichers 23 an, dessen mit 24 bezeichneter Informationseingang mit Ausgängen 25 der Mikroprozessorschaltung 13 verbunden ist.

Die vorstehend beschriebene Vorrichtung funktioniert folgendermaßen.

Wird von dem Benutzer der Vorrichtung eine Taste der Tastatur 10 betätigt, dann steht an den Ausgängen 11 ein dem Tastensymbol entsprechend kodiertes Signal, das an die Eingänge 14 der ODER-Schaltung 15 gelangt. Sobald eine der Ausgangsleitungen 11 ein H(High)-Signal führt, gibt die ODER-Schaltung ein H-Signal ab, das die Monoflopschaltung 16 triggert. An dem Ausgang 17 der Monoflopschaltung und dem ersten Eingang 18 der UND-Schaltung 19 steht demzufolge ebenfalls ein H-Signal für eine Zeit t, die davon abhängt, wie lange es im ungünstigsten Falle dauert, bis ein durch Tastendruck in der Tastatur ausgelöstes Signal in dem RAM-Speicher 23 gespeichert ist.

Das kodierte Signal an den Ausgängen 11 der Tastatur 10 wird gleichzeitig den Eingängen 12 der Mikroprozessorschaltung 13 zugeführt. Soll das von der Wähltastatur gelieferte kodierte Signal entsprechend der Programmierung der Mikroprozessorschaltung in den RAM-Speicher 23 übernommen werden, so gibt die Mikroprozessorschaltung an ihrem Schreib-Signal-Ausgang 21 ein H-Signal ab, so daß gleichzeitig zwei H-Signale an den Eingängen 18 und 20 der UND-Schaltung 19 liegen. Am Ausgang der UND-Schaltung steht deshalb ein H-Signal zur Verfügung, das dem Schreib-Eingang 22 des RAM-Speichers zugeführt wird. Solange an den Eingängen 18 und 20 der UND-Schaltung 19 H-Signale liegen, werden Informationen (Daten, Adressen, Steuerbefehle) von der Mikroprozessorschaltung 13 in den RAM-Speicher übertragen. Gibt die Tastatur nach Ablauf der Zeit t kein neues Kodesignal an ihren Ausgängen 11 ab, so sorgt die UND-Schaltung 19 dafür, daß der Schreib-Eingang 22 des RAM-Speichers 23 ein L(Low)-Signal erhält, welches den RAM-Speicher gegen das Einspeichern von unerwünschten Signalen sperrt.

Wie in der Zeichnung durch eine gestrichelte Linie angedeutet, kann zwischen einem Ausgang 26 der Mikroprozessorschaltung 13 und einem Rücksetzeingang 27 der Monoflopschaltung 16 eine zusätzliche Leitungsverbindung vorgesehen sein, wodurch folgende Funktion erreicht wird.

Am Ausgang 26 gibt die Mikroprozessorschaltung 13 immer dann einen Impuls ab, wenn eine Information in den RAM-Speicher 23 eingespeichert ist. Da die Zeit von der Betätigung einer Taste der Tastatur 10 bis zum Einspeichern der Information in den RAM-Speicher normalerweise kürzer ist als die durch die Monoflopschaltung 16 gegebene Zeit, wird die Monoflopschaltung vorzeitig zurückgesetzt. Damit liefert die UND-Schaltung 19 unabhängig davon, welches logisches Signal an ihrem zweiten Eingang 20 steht, ein L-Signal, das am Schreib-Eingang 22 liegt und den RAM-Speicher 23 sperrt.

**Patentansprüche**

1. Verfahren zum Schutz der mittels einer Tastatur in einen RAM (Random-Access Memory)-Speicher eingegebenen Informationen gegen ein Überschreiben dieser Informationen durch nicht von der Tastatur herrührende Informationen, dadurch gekennzeichnet, daß der Schreib-Eingang (22) des RAM-Speichers (23) nur in der Zeit (t) freigegeben wird, in der mit der Tastatur (10) Informationen eingegeben werden, und daß der Schreib-Eingang in der anderen Zeit gesperrt ist.

2. Vorrichtung zur Durchführung des Verfahrens nach Anspruch 1, dadurch gekennzeichnet, daß die Signalausgänge (11) der Tastatur (10) erstens mit einer Mikroprozessorschaltung (13) und zweitens mit einer ODER-Schaltung (15) verbunden sind, daß der Ausgang der ODER-Schaltung über eine Monoflopschaltung (16) mit einem ersten Eingang (18) einer UND-Schaltung (19) verbunden ist, daß ein zweiter Eingang (20) der UND-Schaltung mit einem Schreib-Signal-Ausgang (21) der Mikroprozessorschaltung verbunden ist und daß sich an den Ausgang der UND-Schaltung der Schreib-Eingang (22) des RAM-Speichers (23) anschließt.

3. Vorrichtung nach Anspruch 2, dadurch gekennzeichnet, daß die Zeit (t) der Monoflopschaltung (16) entsprechend der für das Eingeben einer Information in den RAM-Speicher (23) maximal erforderlichen Zeit gewählt ist.

**Claims**

1. A method of protecting information entered in a RAM (Random Access Memory) store by means of a keyboard from being overwritten by information not originating from the keyboard, characterised in that the Write input (22) of the RAM store (23) is only opened for the time (t) in which information is entered by means of the keyboard (10), and in that the Write input is blocked for the rest of the time.

2. A device for carrying out the method as claimed in Claim 1, characterised in that the signal outputs (11) of the keyboard (10) are connected on the one hand to a microprocessor circuit (13) and, on the other hand, to an OR circuit (15), in that the output of the OR circuit is connected by way of a monoflop circuit (16) to a first input (18) of an AND circuit (19), in that a second input (20) of the AND circuit is connected to a Write signal output (21) of the microprocessor circuit, and in that the Write input (22) of the RAM store (23) is connected to the output of the AND circuit.

3. A device as claimed in Claim 2, characterised in that the time (t) of the monoflop circuit (16) is selected according to the maximum time required to enter an item of information in the RAM store (23).

**Revendications**

1.- Procédé pour protéger les informations introduites au moyen d'un clavier dans une mémoire RAM (Random-Access Memory), contre une surcharge de ces informations par des informations ne provenant pas du clavier, procédé caractérisé en ce que l'entrée d'inscription (22) de la mémoire RAM n'est libérée que pendant le temps (t) pendant lequel des informations sont introduites avec le clavier (10), tandis que cette entrée d'inscription est bloquée pendant le reste du temps.

2.- Dispositif pour la mise en oeuvre du procédé selon la revendication 1, caractérisé en ce que les sorties de signaux (11) du clavier (10) sont en premier lieu reliées à un circuit de microprocesseur (13) et en second lieu à une porte OU (15), la sortie de cette porte OU étant reliée par l'intermédiaire d'une bascule monostable (16) à une première entrée (18) d'une porte ET (19) tandis qu'une seconde entrée (20) de cette porte ET est reliée à une sortie (21) de signaux d'inscription du microprocesseur et que l'entrée d'inscription (22) de la mémoire RAM (23) se raccorde à la sortie de la porte ET.

3.- Dispositif selon la revendication 2, caractérisé en ce que la période (t) de la bascule monostable (16) est choisie de façon à correspondre au temps maximal nécessaire pour l'introduction d'une information dans la mémoire RAM (23).